# FASCICULE DE BREVET EUROPEEN

(11) **EP 2 923 858 B1**
(45) Date de publication et mention de la délivrance du brevet: **06.12.2017**
(21) Numéro de dépôt: 15157235.1
(22) Date de dépôt: 02.03.2015
(51) Int. Cl.: B60B 25/00, B60B 25/04, B60B 7/08, B60B 25/22, B60B 21/04, B60B 3/08

(54) **Roue d'aéronef comportant un canal organisant un chemin de fuite dans la roue**
Rad eines Luftfahrzeugs, das über einen Kanal verfügt, der einen Kriechweg im Rad formt
Aircraft wheel comprising a duct establishing a leakage path in the wheel

(30) Priorité: 28.03.2014 FR 1452738
(43) Date de publication de la demande: 30.09.2015
(73) Titulaire: Safran Landing Systems, 78140 Vélizy-Villacoublay (FR)
(72) Inventeur: Delayre, Xavier, 78140 Velizy-Villacoublay (FR); Mazan, Yohann, 78140 Velizy-Villacoublay (FR)
(74) Mandataire: Parzy, Benjamin Alain

(56) Documents cités:
- WO-A1-98/30403
- DE-U1-202012 101 252
- GB-A- 890 959

## Description

L'invention concerne une roue d'aéronef comportant un canal organisant un chemin de fuite dans la roue.

### ARRIERE PLAN DE L'INVENTION

On connaît des roues d'aéronef comportant une jante et un pneumatique reçu sur la jante, la jante comprenant deux parties assemblées au moyen de boulons répartis régulièrement. Par exemple, la jante comporte deux demi-jantes dont les voiles sont percés pour recevoir des boulons. On connait également des jantes dont l'un des talons est amovible et est assemblé à l'autre talon par des boulons. Typiquement, un tel assemblage peut nécessiter une vingtaine de boulons. A cet effet, les deux parties sont percées d'orifices en regard aptes à recevoir les boulons. Par ailleurs, l'une des parties comporte usuellement un logement dans lequel est agencé un joint d'étanchéité qui se trouve ainsi écrasé entre les deux parties pour assurer l'étanchéité du volume de gaz délimité par la jante et le pneumatique. Une telle roue est connu du document GB 890 959 A et correspond au préambule de la revendication 1. Toutefois, il peut arriver qu'un boulon se desserre de sorte que les deux parties ne soient plus correctement serrées l'une contre l'autre. Il peut même arriver que l'un des boulons soit manquant. Ceci peut entraîner un endommagement de la roue.

Il s'avère cependant délicat de détecter à l'oeil nu le desserrement dudit boulon.

### OBJET DE L'INVENTION

L'invention a pour objet de proposer une roue d'aéronef permettant d'obvier au problème précité.

### RESUME DE L'INVENTION

En vue de la réalisation de ce but, on propose une roue d'aéronef comportant une jante et un pneumatique reçu sur la jante, la jante comprenant deux parties assemblées entre elles au moyen de boulons d'assemblage, l'une des parties comportant un logement dans lequel est agencé un joint d'étanchéité qui est interposé entre les deux parties.

Selon l'invention, l'une des parties comprend au moins un canal s'étendant sous le joint et débouchant dans le logement pour organiser un chemin de fuite entre d'une part un volume délimité par la jante et le pneumatique et d'autre part un espace entre les parties, le chemin étant nominalement fermé par le joint lorsque les boulons sont serrés correctement mais autorisant une fuite dudit volume vers l'extérieur lorsque l'un des boulons adjacent audit orifice n'est pas serré correctement ou est manquant.

Ainsi, en cas de boulon desserré, le canal permet de provoquer volontairement une fuite du gaz contenu dans le pneumatique vers l'extérieur de la roue ce qui entraîne un dégonflement rapide et visible du pneumatique. Il s'avère donc simple de constater l'existence d'un problème au vu du pneumatique dégonflé ce qui incite à étudier plus en détail l'état de serrage des différents boulons.

La détection d'un problème de fixation entre les deux parties de la jante s'en trouve donc simplifiée.

En outre, on limite ainsi le risque que la roue ne se trouve endommagée par le problème de fixation entre les deux parties de la jante.

### BREVE DESCRIPTION DES DESSINS

L'invention sera mieux comprise à la lumière de la description qui suit de modes particuliers de réalisation de l'invention, en référence aux figures des dessins annexés, parmi lesquelles :
- la figure 1 est une vue en coupe longitudinale d'une roue d'aéronef selon un premier mode de réalisation de l'invention.
- la figure 2 est une vue de face partielle de la demi-jante 1b illustrée à la figure 1 montrant l'un des canaux.
- la figure 3 est une vue agrandie du détail A illustré à la figure 1, un espace exagéré ayant été illustré entre les demi-jantes.
- la figure 4 est une vue encore agrandie du détail A, sans le joint d'étanchéité et sans la demi-jante 2a.
- la figure 5 est une vue en coupe longitudinale d'une roue d'aéronef selon un deuxième mode de réalisation de l'invention, selon un plan passant par l'axe de rotation de la roue et s'étendant pour moitié à travers l'un des boulons d'assemblage et s'étendant pour moitié entre deux boulons d'assemblage consécutifs.
- la figure 6 est une vue en coupe agrandie du détail B illustré à la figure 5, un espace exagéré ayant été illustré entre les parties de jante.

### DESCRIPTION DETAILLEE DE L'INVENTION

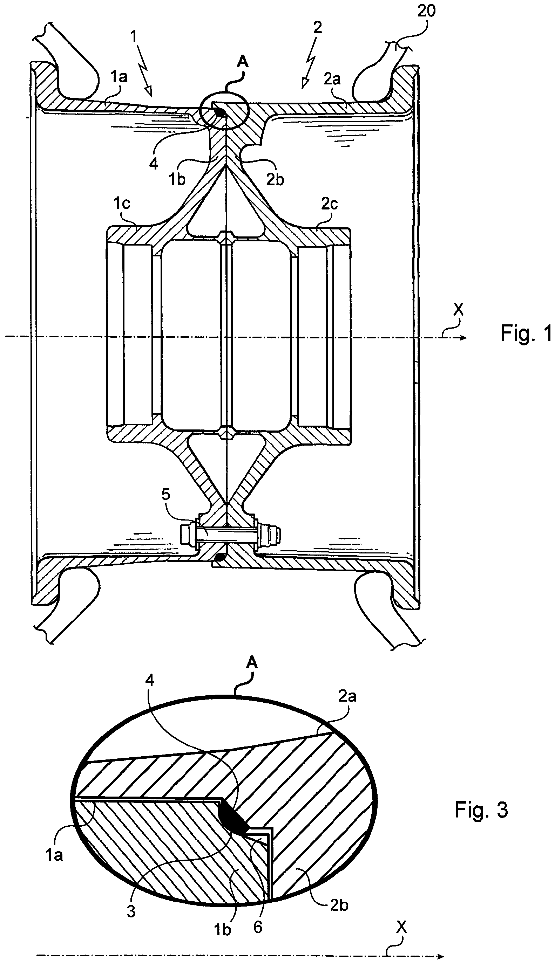

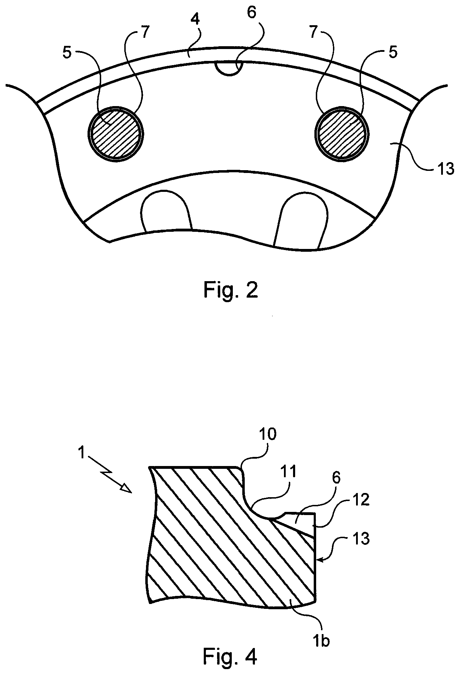

Selon un premier mode de réalisation, la roue illustrée aux figures 1 et 2 comprend, de façon connue en soi, deux demi-jantes 1, 2 qui comportent chacune une portion de jante la, 2a, un voile 1b, 2b, ainsi qu'un demi-moyeu 1c, 2c. L'une des demi-jantes 1 comporte un logement 3 ménagé dans son voile 1b et dans lequel est agencé un joint d'étanchéité 4.

Les demi-jantes 1, 2 sont rapprochées suivant une direction parallèle à un axe de rotation de la roue X et comportent des portées de centrage pour assurer le bon positionnement relatif des demi-jantes 1, 2. Les demi-jantes sont maintenues en position par des boulons d'assemblage 5 agencés dans des orifices 7 percés en regard dans les demi-jantes (un seul boulon est visible ici, mais il en existe plusieurs, typiquement 4 à 24, régulièrement répartis).

De façon connue en soi, les boulons 5 sont vissés et serrés pour assembler les deux demi-jantes 1, 2 après montage d'un pneumatique 20 sur les portions de jantes la, 1b. Dans cette position, le joint d'étanchéité 4 est écrasé entre les deux demi-jantes 1, 2 et empêche ainsi le gaz contenu dans un volume délimité par le pneumatique 20 et les deux demi-jantes 1, 2 de s'échapper vers l'extérieur de la roue.

Comme illustré aux figures 3 et 4, et conformément à l'invention, la demi-jante la comportant le logement 3 comprend une pluralité de canaux 6 (dont un seul est visible sur les figures). Chaque canal 6 s'étend entre deux boulons 5 d'assemblage de la roue. La demi-jante 1 comporte donc autant de canaux 6 qu'elle ne comporte de boulons 5. De préférence, chaque canal 6 s'étend à équidistance des deux orifices 7 associés dans la demi-jante 1.

Par ailleurs, chaque canal 6 s'étend sous le joint 4 et débouche à l'une de ses extrémités dans le logement 3 et à l'autre de ses extrémités à la jonction entre les deux voiles 1b, 2b.

Ainsi, chaque canal 6 est agencé pour organiser un chemin de fuite entre le volume délimité par le pneumatique et l'extérieur en passant par l'espace entre les demi-jantes.

Lorsque les boulons 5 sont tous serrés correctement, ces chemins sont obturés par le joint 4. Lorsque l'un des boulons 5 n'est pas serré correctement ou est manquant, les deux demi-jantes 1, 2 s'écartent l'une de l'autre au niveau dudit boulon 5 de sorte que le joint 4 n'est plus correctement écrasé par les deux demi-jantes 1, 2 à ce niveau. Le joint 4 ne peut alors empêcher le gaz de s'échapper par le chemin de fuite organisé par les deux canaux adjacents audit boulon 5. Le pneumatique se dégonfle, ce qui est repérable par les équipes de maintenance, ou par mesure de la pression dans le pneumatique.

En référence à la figure 4, la demi-jante 1 comprenant le logement 3 est conformée de sorte que l'extrémité de son voile 1b destinée à être en regard du voile 2b de l'autre demi-jante 2 comporte successivement, selon l'axe de rotation de la roue X en direction de l'autre voile 2b, un arrondi 10, une gorge 11 formant ici le logement 3 et un épaulement 12. L'épaulement 12 a par exemple ici une hauteur de l'ordre de 0,8 millimètre.

La demi-jante 1 est usinée par fraisage au niveau de l'épaulement 12 de sorte à venir supprimer localement ledit épaulement 12 en différentes zones pour former les différents canaux 6. Chaque canal 6 ainsi formé s'étend de la gorge 11 jusqu'à la face 13 du voile 1b qui est en regard de l'autre voile 2b. Ici, le canal présente un fond incliné par rapport à l'axe de rotation X et présente une profondeur maximale en sortie sur la face 13 (typiquement de l'ordre de 2 millimètres).

Il s'avère ainsi très simple de former les canaux 6 même sur des demi-jantes déjà existantes.

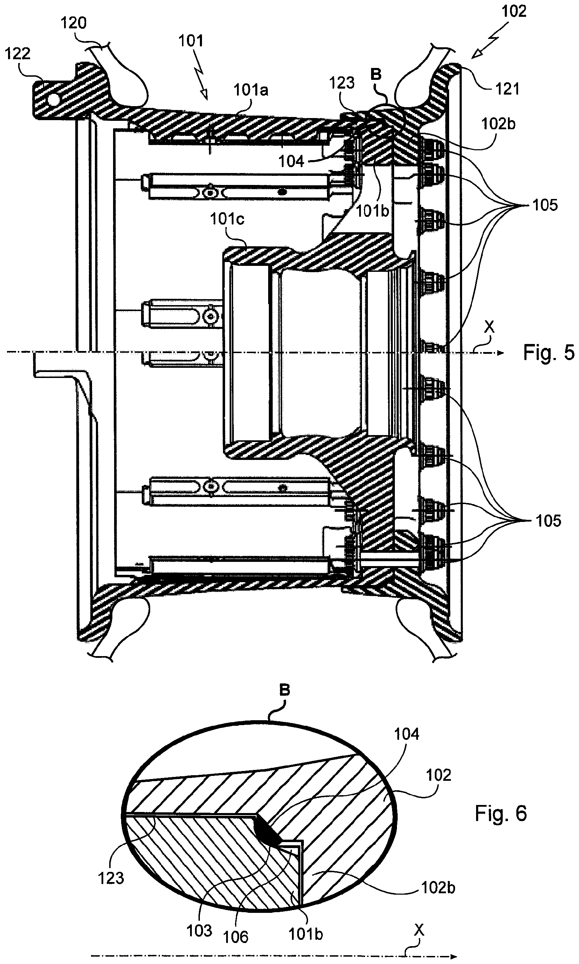

En référence aux figures 5 et 6, un deuxième mode de réalisation de l'invention va être à présent décrit. A la différence du premier mode de réalisation, la jante de la roue d'aéronef comporte une partie principale 101 et une partie amovible 102 formant talon 121 en place des deux demi-jantes 1, 2.

La partie principale 101 comporte, de façon connue en soi, un moyeu 101c, une portion externe annulaire 101a destinée à recevoir un pneumatique 120 et conformée pour présenter un talon 122 à l'une de ses extrémités, l'autre de ses extrémités 123 étant conformée pour recevoir la partie amovible 102 qui est rapportée sur la portion externe annulaire 101a après mise en place du pneumatique 120. La partie principale 101 comporte en outre un voile 101b s'étendant entre le moyeu 101c et la portion externe annulaire 101a. La partie principale 101 comporte ici un logement 103 ménagé dans son voile 101b et dans lequel est agencé un joint d'étanchéité 104.

La partie principale 101 et la partie amovible 102 sont rapprochées suivant une direction parallèle à un axe de rotation de la roue X et comportent des portées de centrage pour assurer le bon positionnement relatif de la partie principale 101 et de la partie amovible 102. Les deux parties 101, 102 sont maintenues en position par des boulons d'assemblage 105 agencés dans des orifices percés en regard dans les deux parties 101, 102 de la jante.

De façon connue en soi, les boulons 105 sont vissés et serrés pour assembler les deux parties 101, 102 après montage du pneumatique 120 sur la portion externe annulaire 101a. Dans cette position, le joint d'étanchéité 104 est écrasé entre les deux parties 101, 102 et empêche ainsi le gaz contenu dans un volume délimité par le pneumatique 120 et la jante de s'échapper vers l'extérieur de la roue.

Comme illustré à la figure 6, et conformément à l'invention, la partie principale 101 comprend une pluralité de canaux 106 (dont un seul est visible sur les figures). Chaque canal 106 s'étend entre deux boulons d'assemblage 105 de la roue. La partie principale 101 comporte donc autant de canaux 106 qu'elle ne comporte de boulons. De préférence, chaque canal 106 s'étend à équidistance des deux orifices associés dans la partie principale 101.

Par ailleurs, chaque canal 106 s'étend sous le joint 104 et débouche à l'une de ses extrémités dans le logement 103 et à l'autre de ses extrémités à la jonction entre le voile 101b de la partie principale 101 et un voile 102b de la partie amovible 102.

Ainsi, chaque canal 106 est agencé pour organiser un chemin de fuite entre le volume délimité par le pneumatique 120 et l'extérieur en passant par l'espace entre la partie principale 101 et la partie amovible 102.

La partie principale 101 est ici conformée de sorte que l'extrémité de son voile 101b destinée à être en regard du voile 102b de la partie amovible 102 comporte successivement, selon l'axe de rotation de la roue X en direction de la partie amovible 102, un arrondi, une gorge formant ici le logement et un épaulement. L'épaulement a par exemple ici une hauteur de l'ordre de 0,8 millimètre.

La partie principale 101 est usinée par fraisage au niveau de l'épaulement de sorte à venir supprimer localement ledit épaulement en différentes zones pour former les différents canaux 106. Chaque canal 106 ainsi formé s'étend de la gorge jusqu'à la face du voile 101b qui est en regard du voile 102b de la partie amovible 102. Ici, le canal 106 présente un fond incliné par rapport à l'axe de rotation X et présente une profondeur maximale en sortie sur la face du voile 101b qui est en regard du voile 102b (typiquement de l'ordre de 2 millimètres) .

L'invention n'est pas limitée à ce qui vient d'être décrit, mais au contraire englobe toute variante entrant dans le cadre défini par les revendications.

Bien que dans l'exemple illustré, les demi-jantes comportent chacune un demi-moyeu, on pourra bien entendu envisager tout autre découpage, du moment que les demi-jantes soient assemblées au moyen de boulons d'assemblage.

La roue d'aéronef pourra comprendre un nombre différent de canaux que celui indiqué.

Bien entendu, le canal pourra avoir une forme différente de celle illustrée. Ainsi bien qu'ici le canal ait un fond incliné relativement à un axe de rotation de la roue, le canal pourra avoir un fond parallèle audit axe. Le canal pourra avoir d'autres dimensions que celles décrites, le canal devant toutefois avoir des dimensions adaptées pour éviter que le joint ne s'affaisse à l'intérieur du canal lorsque les boulons sont serrés correctement ce qui nuirait à l'étanchéité du volume de gaz. Par exemple, bien qu'ici on usine la demi-jante, ou la partie principale, sur une profondeur de 2,4 millimètres on pourra usiner la demi-jante, ou la partie principale, sur une autre profondeur par exemple une profondeur comprise entre 0,8 et 2,4 millimètres au niveau de la face de la partie de la jante à la jonction avec l'autre partie de la jante. Si la demi-jante, ou la partie principale, comporte un épaulement sur lequel le voile de l'autre demi-jante, ou de la partie amovible, est destiné à reposer, on usinera la demi-jante, ou la partie principale, de sorte à supprimer localement totalement ledit épaulement. Le canal aura ainsi une surface interne lisse ce qui facilitera l'évacuation du gaz.

Enfin, le ou les canaux pourront être creusés dans celles des demi-jantes qui ne comporte pas le logement de réception du joint, du moment que ces canaux soient nominalement bouchés par le joint lorsque les boulons sont correctement serrés. De même, le ou les canaux pourront être creusés dans la partie amovible qui ne comporte pas le logement de réception du joint, du moment que ces canaux soient nominalement bouchés par le joint lorsque les boulons sont correctement serrés.

## Revendications

1. Roue d'aéronef comportant une jante et un pneumatique (20 ; 120) reçu sur la jante, la jante étant en deux parties (1,2 ; 101,102) assemblées entre elles au moyen de boulons d'assemblage (5 ; 105), l'une des parties comportant un logement (3 ; 103) dans lequel est agencé un joint d'étanchéité (4 ; 104) qui est interposé entre les deux parties, la roue étant **caractérisée en ce que** l'une au moins des parties comprend au moins un canal (6 ; 106) s'étendant sous le joint pour organiser un chemin de fuite entre d'une part un volume de gaz délimité par la jante et le pneumatique et d'autre part un espace entre les deux parties, le chemin étant nominalement fermé par le joint lorsque les boulons sont serrés correctement mais autorisant une fuite de gaz dudit volume lorsque le boulon associé audit orifice n'est pas serré correctement ou est manquant.

2. Roue selon la revendication 1, dans laquelle la jante comporte deux demi-jantes (1,2), chaque demi-jante formant respectivement l'une des parties de la jante.

3. Roue selon la revendication 2, dans laquelle le canal (6) est creusé dans la demi-jante comportant le logement (3), le canal débouchant dans le logement.

4. Roue selon la revendication 3, dans laquelle le canal (6) a un fond incliné relativement à un axe de rotation (X) de la roue.

5. Roue selon la revendication 3, conformée de sorte que le canal (6) débouche à une extrémité sur une face (13) de la demi-jante (1) en regard de l'autre demi-jante (2).

6. Roue selon la revendication 1, dans laquelle la jante est constituée d'une partie principale (101) et d'une partie amovible (102) formant talon (121), la partie principale comportant :
- un moyeu (101c),
- une portion externe annulaire (101a) destinée à recevoir le pneumatique (120) et conformée pour présenter un talon (122) à l'une de ses extrémités, l'autre de ses extrémités étant conformée pour recevoir la partie amovible qui est rapportée sur la portion externe annulaire après mise en place du pneumatique,
- un voile (101b) s'étendant entre le moyeu et la portion externe annulaire, et
- le logement (103).

7. Roue selon la revendication 6, dans laquelle le canal (106) est creusé dans la partie principale (101), le canal débouchant dans le logement (103).

8. Roue selon la revendication 7, dans laquelle le canal (106) a un fond incliné relativement à un axe de rotation (X) de la roue.

9. Roue selon la revendication 7, conformée de sorte que le canal (106) débouche à une extrémité sur une face du voile (101b) de la partie principale en regard de la partie amovible (102).

10. Roue selon la revendication 1, dans laquelle l'une des parties comprend une pluralité de canaux (6 ; 106) s'étendant chacun entre deux boulons d'assemblage (5 ; 105) consécutifs.

## Patentansprüche

1. Luftfahrzeugrad, umfassend eine Felge und einen Reifen (20; 120), der auf der Felge aufgenommen ist, wobei die Felge aus zwei Teilen (1, 2; 101, 102) besteht, die mittels Verbindungsbolzen (5; 105) miteinander verbunden sind, wobei einer der Teile eine Aufnahme (3; 103) umfasst, in der eine Dichtung (4; 104) angeordnet ist, die zwischen den beiden Teilen angeordnet ist, wobei das Rad **dadurch gekennzeichnet ist, dass** mindestens einer der Teile mindestens einen Kanal (6; 106) umfasst, der sich unter der Dichtung erstreckt, um einem Leckpfad zwischen einerseits einem von der Felge und dem Reifen begrenzten Gasvolumen und andererseits einem Zwischenraum zwischen den beiden Teilen zu erzeugen, wobei der Pfad nominal von der Dichtung verschlossen wird, wenn die Bolzen korrekt angezogen sind, jedoch einen Gasaustritt aus dem genannten Volumen gestattet, wenn der zur Öffnung gehörige Bolzen nicht korrekt angezogen ist oder fehlt.

2. Rad nach Anspruch 1, bei dem die Felge zwei Halbfelgen (1, 2) umfasst, wobei jede Halbfelge jeweils einen der Teile der Felge bildet.

3. Rad nach Anspruch 2, bei dem der Kanal (6) in der Halbfelge ausgehöhlt ist, die die Aufnahme (3) umfasst, wobei der Kanal in die Aufnahme mündet.

4. Rad nach Anspruch 3, bei dem der Kanal (6) einen Boden hat, der relativ zu einer Rotationsachse (X) des Rades geneigt ist.

5. Rad nach Anspruch 3, das derart geformt ist, dass der Kanal (6) an einem Ende auf einer Fläche (13) der Halbfeige (1) gegenüber der anderen Halbfelge (2) mündet.

6. Rad nach Anspruch 1, bei dem die Felge aus einem Hauptteil (101) und einem abnehmbaren Teil (102) gebildet ist, das einen Absatz (121) bildet, wobei der Hauptteil umfasst:
- eine Nabe (101c),
- einen ringförmigen Außenabschnitt (101a), der dazu bestimmt ist, den Reifen (120) aufzunehmen, und so geformt ist, dass er einen Absatz (122) an einem seiner Enden aufweist, wobei das andere seiner Enden so geformt ist, dass es den abnehmbaren Teil aufnimmt, der an dem ringförmigen Außenabschnitt nach Anbringen des Reifens befestigt wird,
- eine Radscheibe (101b), die sich zwischen der Nabe und dem ringförmigen Außenabschnitt erstreckt, und
- die Aufnahme (103).

7. Rad nach Anspruch 6, bei dem der Kanal (106) in dem Hauptteil (101) ausgehöhlt ist, wobei der Kanal in die Aufnahme (103) mündet.

8. Rad nach Anspruch 7, bei dem der Kanal (106) einen Boden hat, der relativ zu einer Rotationsachse (X) des Rades geneigt ist.

9. Rad nach Anspruch 7, das so geformt ist, dass der Kanal (106) an einem Ende auf einer Fläche der Radscheibe (101b) des Hauptteils gegenüber dem abnehmbaren Teil (102) mündet.

10. Rad nach Anspruch 1, bei dem einer der Teile eine Vielzahl von Kanälen (6; 106) umfasst, die sich jeweils zwischen zwei aufeinanderfolgenden Verbindungsbolzen (5; 105) erstrecken.

## Claims

1. Aircraft wheel comprising a rim and a tyre (20; 120) received on the rim, the rim being in two parts (1, 2; 101, 102) assembled with one another by means of assembly bolts (5; 105), one of the parts comprising a recess (3; 103) in which is arranged a seal (4; 104) which is interposed between the two parts, the wheel being **characterized in that** at least one of the parts comprises at least one duct (6; 106) extending beneath the seal so as to establish a leakage path between on one hand a volume of gas delimited by the rim and the tyre, and on the other hand a space between the two parts, the path being nominally closed by the seal when the bolts are tightened correctly but allowing gas to leak from said volume when the bolt associated with said opening is not tightened correctly or is absent.

2. Wheel according to Claim 1, in which the rim comprises two half-rims (1, 2), each half-rim forming respectively one of the parts of the rim.

3. Wheel according to Claim 2, in which the duct (6) is cut into the half-rim comprising the recess (3), the duct opening into the recess.

4. Wheel according to Claim 3, in which the duct (6) has a bottom which is inclined relative to an axis of rotation (X) of the wheel.

5. Wheel according to Claim 3, formed such that the duct (6) opens at one end onto a face (13) of the half-rim (1) opposite the other half-rim (2).

6. Wheel according to Claim 1, in which the rim consists of a main part (101) and of a removable part (102) forming a flange (121), the main part comprising:
- a hub (101c),
- an annular outer portion (101a) designed to receive the tyre (120) and formed so as to have a flange (122) at one of its ends, the other of its ends being formed so as to receive the removable part which is fitted onto the annular outer portion once the tyre is in place,
- a web (101b) extending between the hub and the annular outer portion, and
- the recess (103).

7. Wheel according to Claim 6, in which the duct (106) is cut into the main part (101), the duct opening into the recess (103).

8. Wheel according to Claim 7, in which the duct (106) has a bottom which is inclined relative to an axis of rotation (X) of the wheel.

9. Wheel according to Claim 7, formed such that the duct (106) opens at one end onto a face of the web (101b) of the main part opposite the removable part (102) .

10. Wheel according to Claim 1, in which one of the parts comprises a plurality of ducts (6; 106) each extending between two consecutive assembly bolts (5; 105) .
